# EUROPEAN PATENT APPLICATION

(11) **EP 3 886 284 A1**
(43) Date of publication of application: **29.09.2021**
(21) Application number: 19899612.6
(22) Date of filing: 12.11.2019
(51) Int. Cl.: H02J 1/12

(54) **COMPENSATION CIRCUIT AND METHOD FOR POTENTIAL INDUCED DEGRADATION, AND POWER MODULE AND PHOTOVOLTAIC SYSTEM**

(30) Priority: 21.12.2018 CN 201811573559
(71) Applicant: Huawei Technologies Co., Ltd., Shenzhen Guangdong 518129 (CN)
(72) Inventor: CHEN, Baoguo, Shenzhen, Guangdong 518129 (CN); CHEN, Pan, Shenzhen, Guangdong 518129 (CN); HUANG, Yingpei, Shenzhen, Guangdong 518129 (CN); WANG, Fengru, Shenzhen, Guangdong 518129 (CN)
(74) Representative: Goddar, Heinz J.
(86) International application number: PCT/CN2019/117314
(87) International publication number: WO 2020/125270

(57) **Abstract**

This application discloses a compensation circuit and method for potential induced degradation, a power module, and a photovoltaic system. The compensation circuit includes a switch, a first resistor, and a controller. The switch and the first resistor are connected in series, a first end of the compensation circuit is connected to a positive output end PV+ of a photovoltaic module, and a second end of the compensation circuit is connected to a second end of a first DC-DC converter. The controller is configured to control the switch to be closed when output voltage of the photovoltaic module is less than preset voltage, so that the first DC-DC converter provides electric energy of the battery to the second end of the compensation circuit. A second resistor is connected between the positive output end PV+ and a negative output end PV- of the photovoltaic module. The earth PE is at a zero potential, and voltage of the PV- is voltage on a third resistor, that is, the voltage of the PV- is higher than that of the PE, and the voltage of the PV- relative to the earth is raised. A PID effect is reversely compensated for when the output voltage of the photovoltaic module is less than the preset voltage, to improve power generation efficiency, thereby improving benefits of a power station.

## Description

This application claims priority to Chinese Patent Application No. 2018115735598, filed with the China National Intellectual Property Administration on December 21, 2018 and entitled "COMPENSATION CIRCUIT AND METHOD FOR POTENTIAL INDUCED DEGRADATION, POWER MODULE, AND PHOTOVOLTAIC SYSTEM", which is incorporated herein by reference in its entirety.

### TECHNICAL FIELD

The present invention relates to the field of electric and electronic technologies, and in particular, to a compensation circuit and method for potential induced degradation, a power module, and a photovoltaic system.

### BACKGROUND

As various countries over the world continuously promote energy conservation and emission reduction and energy transition, a technology in which power is generated by using renewable energy has attracted more and more attention. A photovoltaic system is widely used in a power system and a microgrid due to factors such as technological maturity and economic efficiency.

However, photovoltaic power generation is always troubled by power generation efficiency. After a photovoltaic module is used for a period of time, power generation performance degrades, and output power of the entire photovoltaic system is reduced. It is found through study that high voltage between a circuit existing in a crystalline silicon photovoltaic module and a grounded metal frame of the crystalline silicon photovoltaic module causes continuous degradation of power generation performance of the photovoltaic module. This phenomenon is referred to as potential induced degradation (PID, Potential Induced Degradation).

PID is related to an environmental factor, a material of a photovoltaic module, and an inverter array grounding method, and the like. However, even a photovoltaic module using the most advanced material cannot avoid a PID effect.

Existence of the PID effect reduces the output power of the entire photovoltaic system, which directly affects benefits of a power station.

### SUMMARY

To resolve the foregoing technical problem in the current technology, the present invention provides a compensation circuit and method for potential induced degradation, a power module, and a photovoltaic system, to compensate for PID, improve power generation efficiency of a photovoltaic module, and improve benefits of a power station.

An embodiment of this application provides a compensation circuit for potential induced degradation applied to a photovoltaic system. The photovoltaic system includes a photovoltaic module, an inverter, a first DC-DC converter, and a battery. A first end of the first DC-DC converter is connected to the battery, and a second end of the first DC-DC converter is connected to an input end of the inverter. The compensation circuit includes a switch, a first resistor, and a controller. The switch and the first resistor are connected in series. A first end of the compensation circuit is connected to a positive output end PV+ of the photovoltaic module, and a second end of the compensation circuit is connected to the second end of the first DC-DC converter. The controller is configured to control the switch to be closed when output voltage of the photovoltaic module is less than preset voltage, so that the first DC-DC converter provides electric energy of the battery to the second end of the compensation circuit. A second resistor is connected between the positive output end PV+ and a negative output end PV- of the photovoltaic module.

The first resistor, the second resistor, and an equivalent resistor (a third resistor) between the negative output end PV- of the photovoltaic module and the earth PE divide voltage at the second end of the first DC-DC converter. The PE is at a zero potential, and voltage of the PV- is voltage on the third resistor. Therefore, the voltage of the PV- is higher than that of the PE, that is, the PV- is positive voltage relative to the PE. This is equivalent to that the voltage of the PV- relative to the earth is raised in this solution, so as to compensate for PID.

Preferably, to prevent the compensation circuit from wasting electric energy when there is no need to compensate for PID, the controller is further configured to control the switch to be opened when the output voltage of the photovoltaic module is greater than or equal to the preset voltage.

Preferably, to prevent current from reversely flowing, the compensation circuit may further include a diode. The diode is connected in series to both the switch and the first resistor. An anode of the diode is close to a side of the second end of the first DC-DC converter, and a cathode of the diode is close to a side of the PV+. To be specific, the current is prevented from flowing from the PV+ to the input end of the inverter when the switch is closed due to misoperation when the output voltage of the photovoltaic module is greater than or equal to the preset voltage, that is, a path of the compensation circuit is opened in the daytime, and no current flows through the compensation circuit.

Preferably, the compensation circuit may further include a voltage detection circuit, configured to: detect the output voltage of the photovoltaic module, and send the output voltage to the controller, so that the controller determines, based on the output voltage, when to control the switch to be closed and when to control the switch to be opened.

Preferably, the switch may be selected based on an actual requirement, for example, may be one or a combination of a plurality of the following: a relay, a contactor, a circuit breaker, or an insulated gate bipolar transistor IGBT.

According to a second aspect, an embodiment of this application further provides a compensation method for potential induced degradation, applied to the compensation circuit described above. The method includes: controlling the switch to be closed when output voltage of the photovoltaic module is less than preset voltage, so that the first DC-DC converter works to provide electric energy of the battery to a second end of the compensation circuit. A second resistor is connected between a positive output end PV+ and a negative output end PV- of the photovoltaic module. In this way, PID generated by the photovoltaic module may be effectively compensated for, thereby improving power generation efficiency.

According to a third aspect, an embodiment of this application further provides a power module applied to a photovoltaic system. The compensation circuit described above is integrated into the power module. The power module is applied to a photovoltaic system, and the photovoltaic system includes a photovoltaic module, an inverter, a first DC-DC converter, and a battery. A first end of the first DC-DC converter is connected to the battery, and a second end of the first DC-DC converter is connected to an input end of the inverter. The power module further includes a second DC-DC converter. An input end of the second DC-DC converter is connected to an output end of the photovoltaic module, and an output end of the second DC-DC converter is connected to the input end of the inverter. The second DC-DC converter boosts output voltage of the photovoltaic module and then provides the boosted voltage to the input end of the inverter. The power module may not only boost the output voltage of the photovoltaic module, but also compensate for PID generated by the photovoltaic module, thereby improving power generation efficiency of the photovoltaic module.

According to a fourth aspect, an embodiment of this application further provides a photovoltaic system, including the compensation circuit described above, and further including a photovoltaic module, an inverter, a first DC-DC converter, and a battery. A first end of the first DC-DC converter is connected to the battery, and a second end of the first DC-DC converter is connected to an input end of the inverter. The compensation circuit is configured to compensate for potential induced degradation of the photovoltaic module when output voltage of the photovoltaic module is less than preset voltage. The photovoltaic system may compensate for PID of the photovoltaic module by using the compensation circuit, thereby improving power generation efficiency of the photovoltaic system.

Preferably, the photovoltaic system further includes a second DC-DC converter. An input end of the second DC-DC converter is connected to an output end of the photovoltaic module, and an output end of the second DC-DC converter is connected to the input end of the inverter. The second DC-DC converter is configured to boost the output voltage of the photovoltaic module and then provide the boosted voltage to the input end of the inverter.

Preferably, the first DC-DC converter is a bidirectional DC-DC converter. The controller is further configured to: when the output voltage of the photovoltaic module is greater than or equal to the preset voltage, and a power level of the battery is lower than a preset power level, charge the battery by using the photovoltaic module by sequentially passing through the second DC-DC converter and the first DC-DC converter. The first DC-DC converter may not only charge the battery by using electric energy that is output by the photovoltaic module, but also compensate, when the photovoltaic module outputs no electric energy or output electric energy is relatively low, for PID generated by the photovoltaic module.

In comparison with the current technology, the present invention has at least the following advantages:

In this application, the compensation circuit is added between the positive input end of the inverter and the positive output end PV+ of the photovoltaic module, and the second resistor is connected between the positive output end PV+ and the negative output end PV- of the photovoltaic module.

Because the photovoltaic module generates power by relying on sunlight, the photovoltaic module outputs almost no electric energy when there is no sunlight at night, that is, the output voltage of the photovoltaic module is less than the preset voltage. In this case, the battery provides electric energy to the compensation circuit to control the switch in the compensation circuit to be closed. The first resistor, the second resistor, and an equivalent resistor (a third resistor) between the negative output end PV- of the photovoltaic module and the earth PE divide the voltage at the second end of the first DC-DC converter. The PE is at a zero potential, and voltage of the PV- is voltage on the third resistor. Therefore, the voltage of the PV- is higher than that of the PE, that is, the PV- is positive voltage relative to the PE. This is equivalent to that the voltage of the PV- relative to the earth is raised in this solution. Therefore, a PID effect of the photovoltaic module may be reversely compensated for when the output voltage of the photovoltaic module is less than the preset voltage, to improve power generation efficiency of the photovoltaic module, thereby improving benefits of a power station.

### BRIEF DESCRIPTION OF DRAWINGS

To describe the technical solutions in the embodiments of this application or in the current technology more clearly, the following briefly describes the accompanying drawings used in describing the embodiments or the current technology. Clearly, the accompanying drawings in the following description show some embodiments of this application, and a person of ordinary skill in the art may still derive other drawings from these accompanying drawings without creative efforts.
FIG. 1 is a schematic diagram of a compensation circuit for potential induced degradation according to an embodiment of this application;
FIG. 2 is a schematic diagram of another compensation circuit for potential induced degradation according to an embodiment of this application;
FIG. 3 is a schematic diagram of still another compensation circuit for potential induced degradation according to an embodiment of this application;
FIG. 4 is a flowchart of a compensation method for potential induced degradation according to an embodiment of this application; and
FIG. 5 is a schematic diagram of a photovoltaic system according to an embodiment of this application.

### DESCRIPTION OF EMBODIMENTS

Theoretically, when a potential of a negative electrode of a photovoltaic module is a negative potential relative to the earth, a PID effect is prone to occur. To suppress the PID effect, the potential of the negative electrode of the photovoltaic module may be set to a zero potential or a positive potential, so as to mitigate the PID effect. However, grounding the negative electrode PV- of the photovoltaic module increases high voltage between a PV+ and the earth PE. As a result, a requirement for working voltage of a direct current cable relative to the earth is increased, and a security risk and costs are increased. In addition, if the PV- is grounded, there is no protect from a residual current apparatus for a centralized inverter, and touching the PV+ causes an electrical shock accident to a person, injuring the person's body. In addition, because the PV- is grounded, if a grounding fault occurs in a cable between the PV+ and the photovoltaic module, fault current or arc discharge may be generated through a ground cable, which is prone to cause a fire disaster.

Therefore, the foregoing problem exists when the PV- of the photovoltaic module is directly grounded to suppress PID. The embodiments of this application provide the following technical solutions:
A PID phenomenon is caused by high voltage between an output end of the photovoltaic module and the earth, and the output end of the photovoltaic module outputs voltage only in the daytime. Therefore, the PID effect is generated in the daytime. Because the output end of the photovoltaic module outputs no voltage at night, the PID effect is not generated. According to the technical solutions provided in the embodiments of this application, the PID effect is compensated for when output voltage of the photovoltaic module is less than preset voltage. When the output voltage of the photovoltaic module is less than the preset voltage, bus voltage is guided to the PV-, so that positive voltage is formed from the PV- to the PE to reversely compensate for PID of the photovoltaic module, thereby improving power generation efficiency of the photovoltaic module.

To make a person skilled in the art better understand the technical solutions provided in the embodiments of this application, the following describes the technical solutions in detail with reference to the accompanying drawings.

### Embodiment 1:

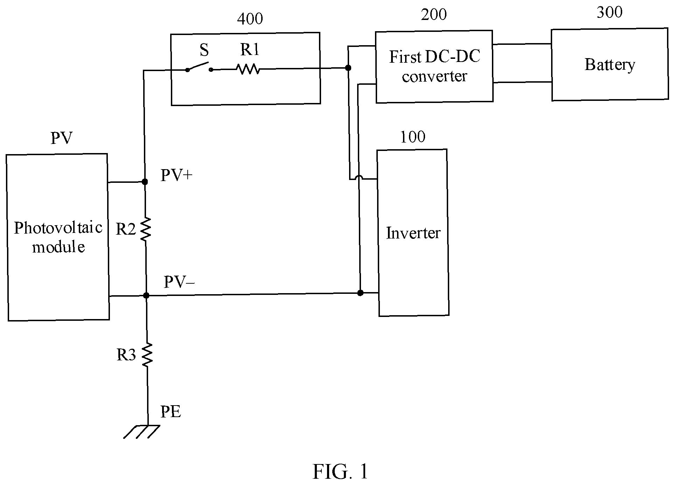

FIG. 1 is a schematic diagram of a compensation circuit for potential induced degradation according to an embodiment of this application.

The compensation circuit for potential induced degradation of a photovoltaic module provided in this embodiment is applied to a photovoltaic system. The photovoltaic system includes a photovoltaic module PV, an inverter 100, a first DC-DC converter 200, and a battery 300. A first end of the first DC-DC converter 200 is connected to the battery 300, and a second end of the first DC-DC converter 200 is connected to an input end of the inverter 100.

The compensation circuit 400 includes a switch S, a first resistor R1, and a controller (not shown in the figure). The switch S and the first resistor R1 are connected in series.

A first end of the compensation circuit 400 is connected to a positive output end PV+ of the photovoltaic module, and a second end of the compensation circuit 400 is connected to the second end of the first DC-DC (direct current-direct current) converter 200.

It should be noted that as long as R1 and S in the compensation circuit 400 are connected in series, S may be connected to the input end of the inverter 100, or R1 may be connected to the input end of the inverter 100. This is not specifically limited in this embodiment.

A function of the switch S is to control a status of connection between the compensation circuit 400 and the second end of the first DC-DC converter 200. When S is closed, the compensation circuit 400 is connected to the second end of the first DC-DC converter 200. When S is opened, the compensation circuit 400 is disconnected from the second end of the first DC-DC converter 200.

Because the photovoltaic module outputs direct current, the inverter needs to convert the direct current into alternating current and feed back the alternating current to a power grid or a device using alternating current.

The controller is configured to control the switch S to be closed when output voltage of the photovoltaic module is less than preset voltage, so that the first DC-DC converter 200 provides electric energy of the battery to the second end of the compensation circuit 400. A second resistor R2 is connected between the positive output end PV+ and a negative output end PV- of the photovoltaic module. R2 is a discharge resistor at a circuit port, and needs to meet a requirement of a security specification.

It should be noted that there is an equivalent resistor, namely, a third resistor R3, between the PV- and the earth PE. R3 is not an actually connected resistor, but an equivalent resistor shown for analyzing a working principle of the circuit. A resistance value of R3 is usually relatively large.

The controller is configured to control an open/closed state of the switch S, that is, control S to be opened or closed. S is a controllable switch, and a specific type of S is not specifically limited in this embodiment of this application. For example, the switch may be one or a combination of a plurality of the following: a relay, a contactor, a circuit breaker, an insulated gate bipolar transistor (IGBT, Insulated Gate Bipolar Transistor), or a metal oxide semiconductor (MOS, Metal Oxide Semiconductor) transistor.

The photovoltaic module generates power by relying on sunlight. Therefore, when there is no sunlight at night, that is, the corresponding output voltage of the photovoltaic module is less than the preset voltage in this case, the battery provides electric energy to a bus at the input end of the inverter to establish bus voltage. In this case, the switch in the compensation circuit is controlled to be closed, R1, R2, and R3 divide the bus voltage, and the PV- is connected to the PE by using R3. The PE is at a zero potential, and voltage of the PV- is voltage on R3. Therefore, the voltage of the PV- is higher than that of the PE, that is, the PV- is positive voltage relative to the PE. This is equivalent to that the voltage of the PV- relative to the earth is raised in this solution. Therefore, a PID effect generated by the photovoltaic module in the daytime may be reversely compensated for when the output voltage of the photovoltaic module is less than the preset voltage, to improve power generation efficiency of the photovoltaic module, thereby improving benefits of a power station.

In addition, to reduce a loss, the controller is further configured to control the switch S to be opened when the output voltage of the photovoltaic module is greater than or equal to the preset voltage. In this case, the compensation circuit is disconnected from the entire system and performs no function. Therefore, no current flows through R1, and no loss occurs, thereby saving electric energy.

### Embodiment 2:

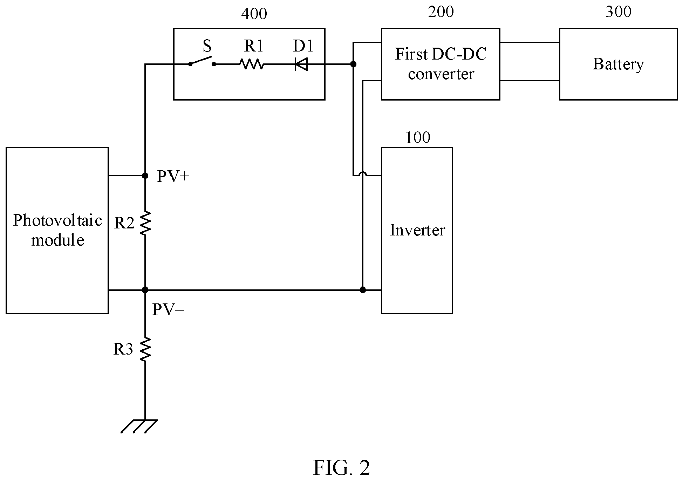

FIG. 2 is a schematic diagram of another compensation circuit for potential induced degradation according to an embodiment of this application.

In this embodiment, the compensation circuit may further include a diode D 1.

The diode is D1 connected in series to both the switch S and the first resistor R1.

An anode of the diode D1 is connected to a side of the input end of the inverter 100, and a cathode of the diode D1 is connected to a side of the PV+.

A function of D1 is to prevent current from reversely flowing. To be specific, the current is prevented from flowing from the PV+ to the input end of the inverter 100 when the switch S is closed due to misoperation when the output voltage of the photovoltaic module is greater than or equal to the preset voltage, that is, a path of the compensation circuit is opened in the daytime, and no current flows through the compensation circuit.

It should be noted that as long as D1, S, and R1 are connected in series, a specific serial connection sequence is not specifically limited in this embodiment of this application. For example, S may be close to a side of the inverter 100, or S may be close to a side of the photovoltaic module. However, the anode of D1 is close to the side of the inverter 100, and the cathode of D1 is close to the side of the photovoltaic module, that is, a sequence of the anode and the cathode of D1 cannot be reversed. If the sequence is reversed, D1 cannot perform the foregoing function.

In addition, another component serially connected in the compensation circuit is not limited in this embodiment of this application. For example, another resistor may be serially connected, or another diode may be serially connected.

In addition, the compensation circuit in this embodiment may further include a voltage detection circuit (not shown in the figure).

The voltage detection circuit is configured to: detect the output voltage of the photovoltaic module, and send the output voltage to the controller.

Because the photovoltaic module can generate power by using solar energy in the daytime, the photovoltaic module has output voltage. However, there is no solar energy at night, and the photovoltaic module outputs no voltage. Certainly, it is also considered as a night scenario if it is rainy or cloudy, because there is no sunlight and the output voltage of the photovoltaic module is quite low, lower than the preset voltage. Therefore, the voltage detection circuit may be used to detect the output voltage of the photovoltaic module to determine whether the compensation circuit needs to work.

### Embodiment 3:

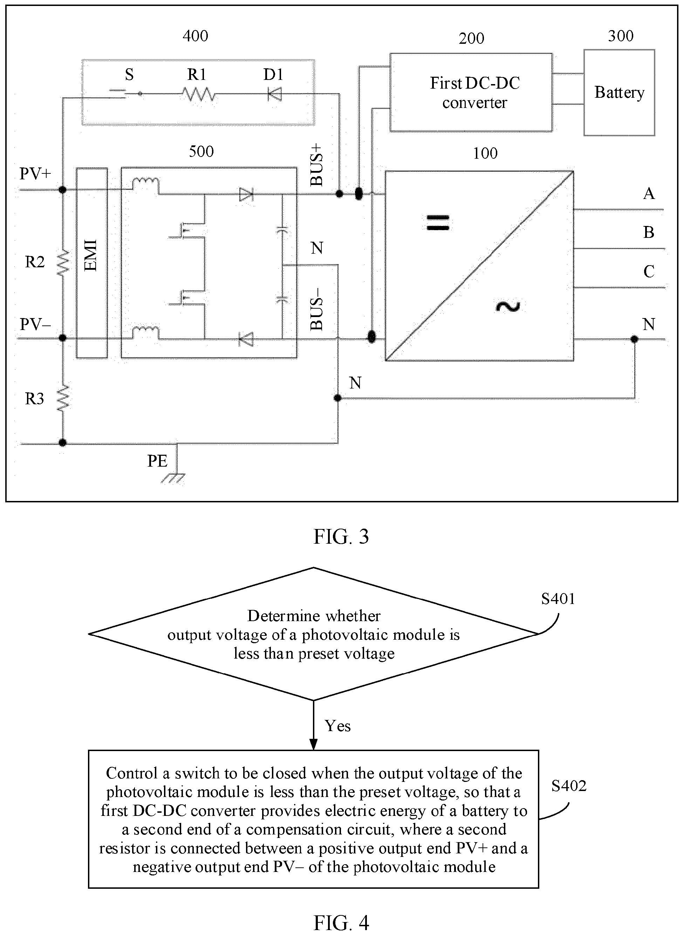

FIG. 3 is a schematic diagram of still another compensation circuit for potential induced degradation according to an embodiment of this application.

A photovoltaic system corresponding to the compensation circuit provided in this embodiment further includes a second DC-DC converter 500.

An input end of the second DC-DC converter 500 is connected to the photovoltaic module, that is, a positive input end of the second DC-DC converter 500 is connected to the PV+ of the photovoltaic module, and a negative input end of the second DC-DC converter 500 is connected to the PV- of the photovoltaic module.

An output end of the second DC-DC converter 500 is connected to the input end of the inverter 100, that is, a positive output end of the second DC-DC converter 500 is connected to a positive input end of the inverter 100, and a negative output end of the second DC-DC converter 500 is connected to a negative input end of the inverter 100.

The second DC-DC converter 500 may be specifically selected based on an actual application scenario. This is not specifically limited in this embodiment of this application. For example, the second DC-DC converter 500 is related to the output voltage of the photovoltaic module, and may be a boost converter, may be a buck converter, or may be a buck-boost converter.

The positive input end of the inverter 100 is connected to a positive bus BUS+, and the negative input end of the inverter 100 is connected to a negative bus BUS-.

The second DC-DC converter 500 may be a boost converter, and fulfills a function of boosting the output voltage of the photovoltaic module and then providing the boosted voltage to the inverter 100.

It may be understood that when the output voltage of the photovoltaic module is less than the preset voltage, S is closed, and the compensation circuit guides output voltage of the first DC-DC 200 back to the PV+. In this case, the second DC-DC converter 500 does not work.

It should be noted that a midpoint N of the output end of the second DC-DC converter 500 is connected to the PE, that is, a potential of the point N is 0.

In addition, the compensation circuit 400 provided in this embodiment includes only simple components such as the resistor, the switch, and the diode. The components are small in both quantity and size, and may be integrated inside a power module with the first DC-DC converter 200, the second DC-DC converter 500, and the inverter 500. Therefore, the compensation circuit 400 is applicable to a scenario in which cabinet space is insufficient. However, currently, in another technical solution, because components are complex and have a large size and are all placed outside the power module, other space specialized for placing a PID suppression component needs to be reserved inside a cabinet.

In addition, in this embodiment, the first DC-DC converter 200 is a bidirectional DC-DC converter.

The controller is further configured to: when the output voltage of the photovoltaic module is greater than or equal to the preset voltage, and a power level of the battery 300 is lower than a preset power level, charge the battery 300 by using the photovoltaic module by sequentially passing through the second DC-DC converter 500 and the first DC-DC converter 200.

To be specific, when the first DC-DC converter 200 charges the battery 300, a current flow direction is from the bus at the input end of the inverter 100 to the battery 300 by passing through the first DC-DC converter 200. When the battery has low power, the first DC-DC converter 200 is used to charge the battery 300.

When the battery 300 provides electric energy to the bus at the input end of the inverter 100, a current flow direction is from the battery 300 to the bus at the input end of the inverter 100 by passing through the first DC-DC converter 200.

In this embodiment, when the output voltage of the photovoltaic module is less than the preset voltage, the battery 300 is used to provide electric energy to the compensation circuit by passing through the first DC-DC converter 200, and then the compensation circuit feeds back the electric energy to the output end of the photovoltaic module, so that the PV- is positive voltage relative to the PE. PID may be suppressed when the PV- is 0 or the positive voltage relative to the PE. Therefore, PID may be compensated for in the solution provided in this embodiment of this application because the PV- may be the positive voltage relative to the PE.

In addition, in this embodiment, an electromagnetic interference prevention circuit may be further included between the photovoltaic module and the input end of the second DC-DC converter 500, and is configured to suppress electromagnetic interference generated by the output voltage of the photovoltaic module, and output the suppressed voltage to the input end of the second DC-DC converter 500.

### Method embodiment:

FIG. 4 is a flowchart of a compensation method for potential induced degradation according to this application.

The compensation method for potential induced degradation of a photovoltaic module provided in this embodiment is applied to the compensation circuit provided in the foregoing embodiment. The method includes the following steps:
S401. Determine whether output voltage of the photovoltaic module is less than preset voltage, and perform S402 if the output voltage of the photovoltaic module is less than the preset voltage.
S402. Control the switch to be closed, so that the first DC-DC converter provides electric energy of the battery to a second end of the compensation circuit, where a second resistor is connected between a positive output end PV+ and a negative output end PV- of the photovoltaic module.

A PID effect is caused by high voltage between an output end of the photovoltaic module and the earth, and the output end of the photovoltaic module outputs voltage only in the daytime. Therefore, the PID effect is generated in the daytime. Because the output end of the photovoltaic module outputs almost no voltage at night, the PID effect is not generated. According to the technical solution provided in this embodiment of this application, the PID effect is compensated for when the output voltage of the photovoltaic module is less than the preset voltage.

Because the photovoltaic module generates power by relying on sunlight, the photovoltaic module outputs almost no electric energy when there is no sunlight at night, that is, the output voltage of the photovoltaic module is less than the preset voltage. In this case, the battery provides electric energy to the compensation circuit to control the switch in the compensation circuit to be closed. The first resistor, the second resistor, and an equivalent resistor (a third resistor) between the negative output end PV- of the photovoltaic module and the earth PE divide voltage at the second end of the first DC-DC converter. The PE is at a zero potential, and voltage of the PV- is voltage on the third resistor. Therefore, the voltage of the PV- is higher than that of the PE, that is, the PV- is positive voltage relative to the PE. This is equivalent to that the voltage of the PV- relative to the earth is raised in this solution. Therefore, the PID effect of the photovoltaic module may be reversely compensated for when the output voltage of the photovoltaic module is less than the preset voltage, to improve power generation efficiency of the photovoltaic module, thereby improving benefits of a power station.

In addition, to reduce a loss, the switch S may be controlled to be opened in the daytime. In this case, the compensation circuit is disconnected from the entire system and performs no function. Therefore, no current flows through R1, and R1 generates no electric energy loss, thereby saving electric energy.

In this embodiment of this application, when the output voltage of the photovoltaic module is less than the preset voltage, the battery is used to provide voltage to a bus. When the battery has low power, electric energy that is output by the photovoltaic module may be used to charge the battery in the daytime.

### Power module embodiment:

Based on the compensation circuit and the compensation method provided in the foregoing embodiments, an embodiment of this application further provides a power module applied to a photovoltaic system. The photovoltaic system includes a photovoltaic module, an inverter, a first DC-DC converter, and a battery. A first end of the first DC-DC converter is connected to the battery, and a second end of the first DC-DC converter is connected to an input end of the inverter. The power module includes a second DC-DC converter and the compensation circuit provided in the foregoing embodiment.

An input end of the second DC-DC converter is connected to an output end of the photovoltaic module, and an output end of the second DC-DC converter is connected to the input end of the inverter.

The second DC-DC converter is configured to boost output voltage of the photovoltaic module and then provide the boosted voltage to the input end of the inverter.

It may be understood that in an actual application, the compensation circuit may be integrated inside the second DC-DC converter, so that a size of an entire hardware device can be reduced, and space occupied by the entire hardware device can be reduced.

### Photovoltaic system embodiment:

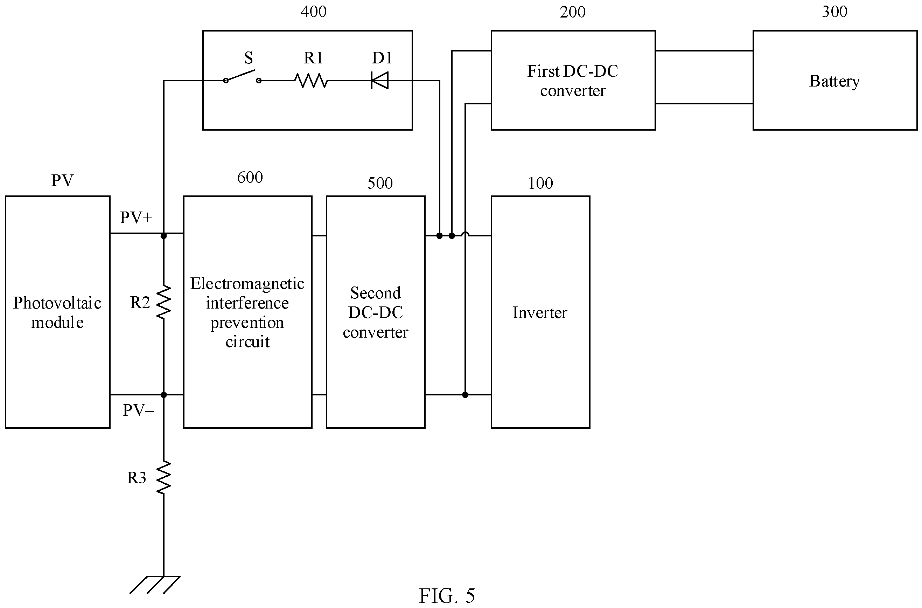

FIG. 5 is a schematic diagram of a photovoltaic system according to an embodiment of this application.

The photovoltaic system provided in this embodiment includes the compensation circuit 400 provided in the foregoing embodiment, and further includes a photovoltaic module PV, an inverter 100, a first DC-DC converter 200, and a battery 300.

The compensation circuit 400 is configured to: when output voltage of the photovoltaic module is less than preset voltage, compensate for potential induced degradation generated by the photovoltaic module PV in the daytime.

The photovoltaic module PV may be a plurality of solar panels in serial and parallel connection. The photovoltaic module PV may convert solar energy into direct-current electric energy for output.

A PID effect is caused by high voltage between an output end of the photovoltaic module and the earth, and the output end of the photovoltaic module outputs voltage only in the daytime. Therefore, the PID effect is generated in the daytime. Because the output end of the photovoltaic module outputs no voltage at night, the PID effect is not generated. According to the technical solution provided in this embodiment of this application, the PID effect of the photovoltaic module is compensated for when the output voltage of the photovoltaic module PV is less than the preset voltage.

Because the photovoltaic module generates power by relying on sunlight, the photovoltaic module outputs almost no electric energy when there is no sunlight at night, that is, the output voltage of the photovoltaic module is less than the preset voltage. In this case, the battery provides electric energy to the compensation circuit to control the switch in the compensation circuit to be closed. The first resistor, the second resistor, and an equivalent resistor (a third resistor) between the negative output end PV- of the photovoltaic module and the earth PE divide voltage at the second end of the first DC-DC converter. The PE is at a zero potential, and voltage of the PV- is voltage on the third resistor. Therefore, the voltage of the PV- is higher than that of the PE, that is, PV- is positive voltage relative to the PE. This is equivalent to that the voltage of the PV- relative to the earth is raised in this solution. Therefore, the PID effect of the photovoltaic module may be reversely compensated for when the output voltage of the photovoltaic module is less than the preset voltage, to improve power generation efficiency of the photovoltaic module, thereby improving benefits of a power station.

In addition, to reduce a loss, the switch S may be controlled to be opened in the daytime. In this case, the compensation circuit is disconnected from the entire system and performs no function. Therefore, no current flows through R1, and R1 generates no electric energy loss, thereby saving electric energy.

In this embodiment of this application, when the output voltage of the photovoltaic module is less than the preset voltage, the battery is used to provide voltage to a bus. When the battery has low power, electric energy that is output by the photovoltaic module may be used to charge the battery in the daytime.

In addition, the photovoltaic system may further include a second DC-DC converter 500. An input end of the second DC-DC converter 500 is connected to the photovoltaic module, that is, a positive input end of the second DC-DC converter 500 is connected to the PV+ of the photovoltaic module, and a negative input end of the second DC-DC converter 500 is connected to the PV- of the photovoltaic module.

An output end of the second DC-DC converter 500 is connected to the input end of the inverter 100, that is, a positive output end of the second DC-DC converter 500 is connected to a positive input end of the inverter 100, and a negative output end of the second DC-DC converter 500 is connected to a negative input end of the inverter 100.

The second DC-DC converter 500 may be a boost converter, and fulfills a function of boosting the output voltage of the photovoltaic module and then providing the boosted voltage to the inverter 100.

It may be understood that when the output voltage of the photovoltaic module is less than the preset voltage and S is closed, the compensation circuit guides bus voltage back to the PV+. In this case, the second DC-DC converter 500 does not work.

It should be noted that a midpoint N of the output end of the second DC-DC converter 500 is connected to the PE, that is, a potential of the point N is 0.

In addition, the compensation circuit 400 provided in this embodiment includes only simple components such as the resistor, the switch, and the diode. The components are small in both quantity and size, and may be integrated inside a power module with the first DC-DC converter 200, the second DC-DC converter 500, and the inverter 500. Therefore, the compensation circuit 400 is applicable to a scenario in which cabinet space is insufficient. However, currently, in another technical solution, because components are complex and have a large size and are all placed outside the power module, other space specialized for placing a PID suppression component needs to be reserved inside a cabinet.

In addition, in the photovoltaic system provided in this embodiment, an electromagnetic interference prevention circuit 600 may be further included between the photovoltaic module and the input end of the second DC-DC converter 500, and is configured to suppress electromagnetic interference generated by the output voltage of the photovoltaic module, and output the suppressed voltage to the input end of the second DC-DC converter 500.

It should be understood that in this application, "at least one" refers to one or more, and "a plurality of' refers to two or more; and "and/or" is used to describe an association relationship between associated objects and represents that three relationships may exist. For example, "A and/or B" may represent the following three cases: Only A exists, both A and B exist, and only B exists. A and B may be in a singular or plural form. The character "/" generally indicates an "or" relationship between the associated objects. "At least one of the following items" or similar expression means any combination of these items, including a single item or any combination of a plurality of items. For example, at least one of a, b, or c may represent a, b, c, "a and b", "a and c", "b and c", or "a, b, and c", where a, b, and c may be in a singular or plural form.

The foregoing descriptions are merely example embodiments of the present invention, and are not intended to limit the present invention in any form. Although the example embodiments of the present invention are disclosed above, the embodiments are not intended to limit the present invention. By using the method and the technical content disclosed above, any persons of ordinary skill in the art can make a plurality of possible changes and modifications on the technical solutions of the present invention, or amend the technical solutions thereof to be embodiments with equal effects through equivalent variations without departing from the protection scope of the technical solutions of the present invention. Therefore, any simple amendments, equivalent variations, and modifications made on the above embodiments according to the technical essence of the present invention without departing from the content of the technical solutions of this application shall fall within the protection scope of the technical solutions of the present invention.

## Claims

1. A compensation circuit for potential induced degradation, applied to a photovoltaic system, wherein the photovoltaic system comprises a photovoltaic module, an inverter, a first DC-DC converter, and a battery, a first end of the first DC-DC converter is connected to the battery, and a second end of the first DC-DC converter is connected to an input end of the inverter;
the compensation circuit comprises a switch, a first resistor, and a controller, wherein the switch and the first resistor are connected in series;
a first end of the compensation circuit is connected to a positive output end PV+ of the photovoltaic module, and a second end of the compensation circuit is connected to the second end of the first DC-DC converter; and
the controller is configured to control the switch to be closed when output voltage of the photovoltaic module is less than preset voltage, so that the first DC-DC converter provides electric energy of the battery to the second end of the compensation circuit, wherein a second resistor is connected between the positive output end PV+ and a negative output end PV- of the photovoltaic module.

2. The compensation circuit according to claim 1, wherein the controller is further configured to control the switch to be opened when the output voltage of the photovoltaic module is greater than or equal to the preset voltage.

3. The compensation circuit according to claim 1, further comprising a diode, wherein
the diode is connected in series to both the switch and the first resistor; and
an anode of the diode is close to a side of the second end of the first DC-DC converter, and a cathode of the diode is close to a side of the PV+.

4. The compensation circuit according to any one of claims 1 to 3, further comprising a voltage detection circuit, wherein
the voltage detection circuit is configured to: detect the output voltage of the photovoltaic module, and send the output voltage to the controller.

5. The compensation circuit according to any one of claims 1 to 4, wherein the switch is one or a combination of a plurality of the following: a relay, a contactor, a circuit breaker, or an insulated gate bipolar transistor IGBT.

6. A compensation method for potential induced degradation, applied to the compensation circuit according to any one of claims 1 to 5, wherein the method comprises:
controlling the switch to be closed when output voltage of the photovoltaic module is less than preset voltage, so that the first DC-DC converter works to provide electric energy of the battery to a second end of the compensation circuit, wherein a second resistor is connected between a positive output end PV+ and a negative output end PV- of the photovoltaic module.

7. A power module applied to a photovoltaic system, applied to a photovoltaic system, wherein the photovoltaic system comprises a photovoltaic module, an inverter, a first DC-DC converter, and a battery, a first end of the first DC-DC converter is connected to the battery, and a second end of the first DC-DC converter is connected to an input end of the inverter;
the power module comprises a second DC-DC converter and the compensation circuit according to any one of claims 1 to 5;
an input end of the second DC-DC converter is connected to an output end of the photovoltaic module, and an output end of the second DC-DC converter is connected to the input end of the inverter; and
the second DC-DC converter is configured to boost output voltage of the photovoltaic module and then provide the boosted voltage to the input end of the inverter.

8. A photovoltaic system, comprising the compensation circuit according to any one of claims 1 to 5, and further comprising a photovoltaic module, an inverter, a first DC-DC converter, and a battery, wherein
a first end of the first DC-DC converter is connected to the battery, and a second end of the first DC-DC converter is connected to an input end of the inverter; and
the compensation circuit is configured to compensate for potential induced degradation of the photovoltaic module when output voltage of the photovoltaic module is less than preset voltage.

9. The photovoltaic system according to claim 8, wherein the photovoltaic system further comprises a second DC-DC converter, an input end of the second DC-DC converter is connected to an output end of the photovoltaic module, and an output end of the second DC-DC converter is connected to the input end of the inverter; and
the second DC-DC converter is configured to boost the output voltage of the photovoltaic module and then provide the boosted voltage to the input end of the inverter.

10. The photovoltaic system according to claim 9, wherein the first DC-DC converter is a bidirectional DC-DC converter; and
the controller is further configured to: when the output voltage of the photovoltaic module is greater than or equal to the preset voltage, and a power level of the battery is lower than a preset power level, charge the battery by using the photovoltaic module by sequentially passing through the second DC-DC converter and the first DC-DC converter.
